# EUROPÄISCHE PATENTANMELDUNG

(11) **EP 1 704 979 A1**
(43) Veröffentlichungstag der Anmeldung: **27.09.2006**
(21) Anmeldenummer: 05006265.2
(22) Anmeldetag: 22.03.2005
(51) Int. Cl.: B29C 33/56, B29C 33/42, B29C 45/14, B29C 51/30, B29C 44/58

(54) **Folien-Tiefzieh- oder Folien-Schäumform sowie Verfahren zum Herstellen eines Verbundbauteils**

(71) Anmelder: ArvinMeritor GmbH, 63128 Dietzenbach (DE)
(72) Erfinder: Ludwig, Matthias, 38159 Vechelde (DE); Niesner, Tobias, 38518 Gifhorn (DE); Hardel, Sven, 29386 Wettendorf (DE)
(74) Vertreter: Kitzhofer, Thomas

(57) **Zusammenfassung**

Eine Folien-Tiefzieh- oder Folien-Schäumform hat einen Trägerkörper (20) mit einer thermischen Isolationsschicht (24) an der Folienkontaktfläche (16), damit sich die vor dem Tiefziehen erwärmte Folie (12) gleichmäßig und langsam abkühlt.

## Beschreibung

Die Erfindung betrifft eine Folien-Tiefzieh- oder Folien-Schäumform und ein Verfahren zum Herstellen eines Verbundbauteils, mit einer die Außenhaut des fertigen Verbundbauteils definierenden Folie.

Insbesondere betrifft die Erfindung durch die Folien-Tiefzieh- oder Folien-Schäumform und das erfindungsgemäße Verfahren hergestellte Fahrzeugkarosserieanbauteile. Karosserieanbauteile sind solche Teile, die im fertig montierten Zustand des Fahrzeugs einen Abschnitt der Außenhaut bilden und an der Karosserie befestigt werden. Derartige Karosserieanbauteile sind beispielsweise Fahrzeugdächer, Türen, Türenaußenverkleidungen, Klappen wie Heckklappe oder Motorraumdeckel, Kotflügel, Stoßstangen, Windabweiser etc. Solche Fahrzeugkarosserieanbauteile können durch Hinterschäumen oder Hinterspritzen einer Folie, insbesondere einer Kunststoff- oder Aluminiumfolie, einfach und kostengünstig hergestellt werden. Das Hinterschäumen oder Hinterspritzen erfolgt üblicherweise nach dem Tiefziehen der Folie. Die spätere Qualität der Außenhaut hängt u.a. vom Tiefziehen ab.

Aufgabe der Erfindung ist es, eine Folien-Tiefzieh- oder Folien-Schäumform zu schaffen und ein Verfahren zum Herstellen eines Verbundbauteils vorzustellen, die für eine bessere Oberflächenqualität der Folie und damit auch für eine bessere Oberflächenqualität des Verbundbauteils sorgen.

Die erfindungsgemäße Folien-Tiefzieh- oder Folien-Schäumform ist dadurch gekennzeichnet, daß die Folien-Tiefzieh- oder Folien-Schäumform einen Trägerkörper mit einer thermischen Isolationsschicht an der Folienkontaktfläche der Folien-Tiefzieh- oder Folien-Schäumform hat.

Durch die Temperaturdifferenz der üblicherweise aufgeheizten Folie zur üblicherweise ebenfalls aufgeheizten Tiefziehform ergibt sich im Tiefziehprozeß eine lokal ungleichmäßige Abkühlung der tiefgezogenen Folie, die die Folienoberfläche optisch verschlechtert. Es ist üblicherweise nicht möglich, Folie und Tiefzieh- oder Schäumform exakt auf dieselbe Temperatur zu bringen, so daß es zu dieser Temperaturdifferenz kommt. Durch Aufbringen einer thermischen Isolationsschicht auf den Trägerkörper (die eigentliche Folien-Tiefzieh- oder Folien-Schäumform) wird der Wärmeübergang zwischen der tiefgezogenen Folie und der Tiefzieh- oder Schäumform behindert, so daß ein gleichmäßiges, langsames Abkühlen der Folie über die gesamte Fläche erreicht wird. Dies hat zur Folge, daß die Folienoberfläche eine deutlich bessere Optik und damit ein höherwertiges Aussehen hat.

Gemäß einer bevorzugten Ausführungsform ist der Trägerkörper aus Metall, insbesondere Aluminium oder einer Aluminiumlegierung und trägt die Isolationsschicht.

Die Isolationsschicht sollte eine Wärmeleitfähigkeit haben, die max. 50 %, vorzugsweise max. 10 % der Wärmeleitfähigkeit des Trägerkörpers entspricht, um die Folie ausreichend langsam abzukühlen. Bei der bevorzugten Ausführungsform ist die Wärmeleitfähigkeit der Isolationsschicht sogar max. 5 % der der Trägerschicht.

Die Isolationsschicht sollte als Beschichtung ausgeführt sein, insbesondere als Beschichtung, die eine stoffschlüssige Verbindung mit dem Trägerkörper eingeht.

In diesem Zusammenhang ist beispielsweise eine anodische Oxidation des Trägerkörpers an der Folienkontaktfläche gut geeignet, durch die die Beschichtung erzeugt wird. Ein Beispiel hierfür ist eine Eloxalschicht.

Ein anderes Beispiel für die Beschichtung ist eine Oxidkeramikschicht oder, allgemeiner, eine plasmachemische Beschichtung.

Die Isolationsschicht hat bevorzugt eine Dicke zwischen 6 und 50 µm.

Bei Karosserieanbauteilen besteht der Nachteil, daß die Sichtfläche, also die Oberfläche extrem glatt ist. Lackierte Oberflächen hingegen haben eine sehr spezifische, leicht orangenhautartige Oberfläche. Diese unterschiedliche Oberflächenstruktur hat zur Folge, daß tiefgezogene und nicht-lackierte Folien nicht an lackierte Bleche am Fahrzeug angrenzen sollten. Um dies aber zu ermöglichen, werden die tiefgezogenen Folien bislang z.T. lackiert.

Die vorliegende Erfindung schafft eine Folien-Tiefzieh- oder Folien-Schäumform und ein Verfahren, die diesen Angleich der Oberflächen auf einfache Weise ermöglichen, indem nämlich die Folienkontaktfläche selbst eine lackähnliche Oberflächenstruktur hat. Die lackähnliche Oberflächenstruktur wird also nicht durch einen separaten Verfahrensschritt wie Lackieren oder Prägen der Folie nach dem Tiefziehen oder nach dem Hinterschäumen erreicht, sondern während des Tiefziehens. Versuche haben ergeben, daß die lackähnliche Oberflächenstruktur auch nach dem anschließenden Hinterschäumen oder Hinterspritzen noch erhalten bleibt.

Die lackähnliche oder auch orangenhautähnliche Oberflächenstruktur ist vorzugsweise unter der Isolationsschicht bereits vorgesehen, d.h. zuerst wird der Trägerkörper vorzugsweise vollflächig mit der orangenhautartigen Oberfläche erzeugt, und anschließend wird dieser Trägerkörper erst an der Kontaktfläche mit der Isolationsschicht versehen. Alternativ wird die Oberfläche nach dem Beschichten bearbeitet, um die lackähnliche Struktur zu erzeugen.

Die lackähnliche Oberflächenstruktur an der Folien-Tiefzieh- oder Folien-Schäumform wird z.B. durch Ätzen, Funkenerudieren, Prägen oder Strahlen (z.B. Kugel- oder Sandstrahlen) erzeugt.

Es ist insbesondere vorgesehen, daß die mittlere Bearbeitungstiefe, d.h. die mittlere Tiefe der entstehenden abgerundeten Täler zu den abgerundeten "Hügeln" im Bereich von 0,03 und 0,05 mm liegt, bevorzugt etwa 0,03 mm beträgt.

Wie durch Versuche herausgefunden sollte die Bearbeitungstiefe etwa doppelt so groß sein wie die Tiefe der Lackstruktur der benachbarten lackierten Fahrzeugteile, allgemeiner ausgedrückt zwischen dem 1,5- bis 3,0-fachen liegen.

Die Erfindung schafft auch ein Verfahren zum Herstellen eines Verbundbauteils, mit einer die Außenhaut des fertigen Verbundbauteils definierenden Folie, wobei folgende Schritte vorgesehen sind:
a) eine Folie wird in ein mit der erfindungsgemäßen Folien-Tiefzieh- oder Folien-Schäumform versehenes Tiefziehwerkzeug gelegt und
b) die Folie wird tiefgezogen.

Die Folie und/oder die Folien-Tiefziehform werden vor dem Tiefziehen bzw. während des Tiefziehens beheizt, um die Temperaturdifferenz zwischen Folie und Folien-Tiefziehform nicht zu groß werden zu lassen und auch das Ausformen zu verbessern.

Wie bereits erläutert ist das Verbundbauteil vorzugsweise ein großflächiges Karosserieanbauteil, das insbesondere hinterschäumt oder hinterspritzt wird, nachdem es zuvor in einem separaten Schritt tiefgezogen wurde. Alternativ könnte man es sich jedoch auch vorstellen, während des Tiefziehens zu hinterschäumen oder zu hinterspritzen und den Schäum- oder Spritzdruck für das Tiefziehen zu verwenden.

Als Folie wird eine mehrschichtige, insbesondere durchgefärbte Koextrusionsfolie verwendet, wie die bevorzugte Ausführungsform lehrt.

Diese Folie sollte eine Mindestdicke von 0,8 mm, bevorzugt sogar 2 mm haben.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 eine perspektivische Draufsicht auf eine Folien-Tiefzieh- oder Folien-Schäumform eines erfindungsgemäßen Tiefziehwerkzeugs,
- Figur 2 einen Schnitt durch die Folien-Tiefzieh- oder Folien-Schäumform nach der Linie II-II in Figur 1,
- Figur 3a eine schematische Schnittansicht durch ein erfindungsgemäßes Hinterschäumwerkzeug mit fertigem, hinterschäumtem Verbundbauteil, das durch das erfindungsgemäße Verfahren hergestellt wird,
- Figur 3b eine vergrößerte Draufsicht auf eine erfindungsgemäße Schäumform und
- Figur 4 ein Karosserieanbauteil mit einer erfindungsgemäß hergestellten Motorhaube.

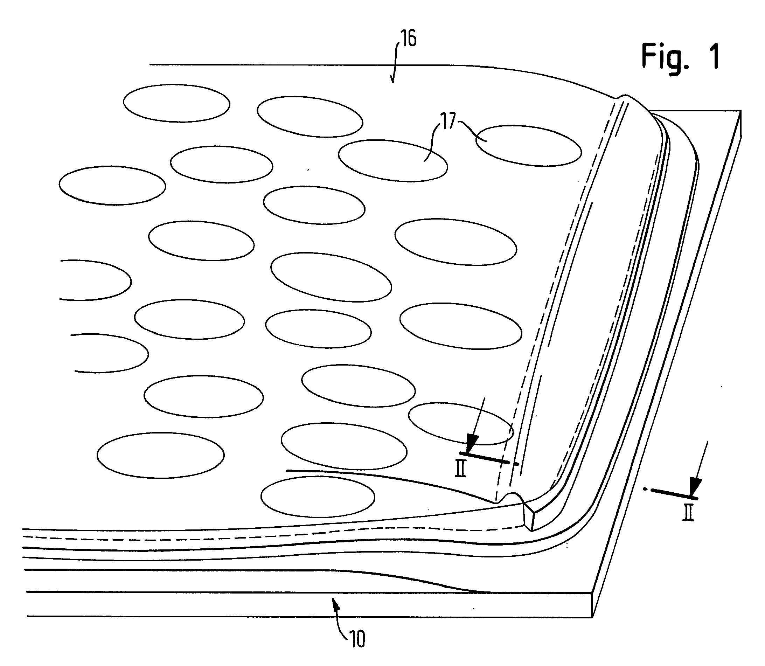

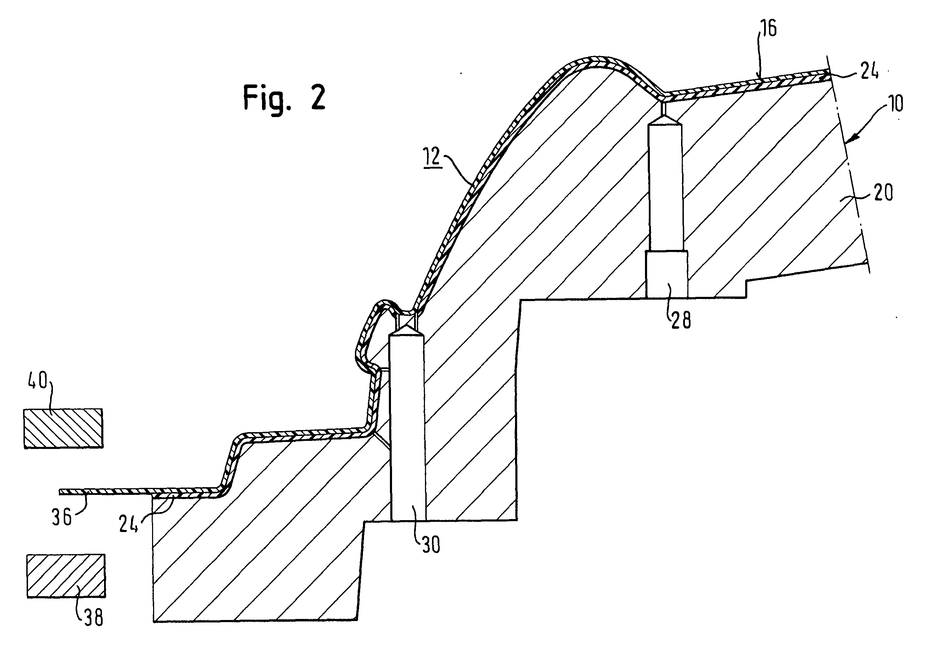

In Figur 1 ist die rechte Hälfte einer Folien-Tiefzieh- oder Folien-Schäumform 10 dargestellt. Die Tiefzieh- oder Schäumform 10 dient zum Umformen einer wenigstens 0,8 mm dicken mehrschichtigen, durchgefärbten Koextrusionsfolie 12, die in Figur 2 zu sehen ist.

Die Folie 12, die in dünnen Platten angeliefert wird, wird im Tiefziehwerkzeug tiefgezogen und wird später die Außenhaut eines großflächigen Karosserieanbauteils bilden. Vorliegend ist das Karosserieanbauteil ein Fahrzeugdachmodul. Das Karosserieanbauteil ist ein sog. Verbundbauteil, dessen Außenhaut im eingebauten Zustand auch die sichtbare Außenhaut des Fahrzeugs abschnittsweise bildet.

Die Folien-Tiefzieh- oder Folien-Schäumform hat eine Oberseite, die auch die Folienkontaktfläche 16 (Kontakt zwischen der Folie 12 und der Tiefzieh- oder Schäumform 10 während des Tiefziehens) darstellt.

Die Unter- oder Rückseite der Folien-Tiefzieh- oder Folien-Schäumform bildet keine Folienkontaktfläche.

Die Folien-Tiefzieh- oder Folien-Schäumform besteht hauptsächlich aus dem Trägerkörper 20, der aus Aluminium oder einer Aluminiumlegierung ist und auf seiner Oberseite eine Kontur besitzt, die der gewünschten Kontur der später tiefgezogenen Folie entspricht.

Die Herstellung der Folien-Tiefzieh- oder Folien-Schäumform wird im folgenden erläutert. Zuerst wird die Oberseite, also die spätere Folienkontaktfläche 16 durch Fräsen oder andere spanende Bearbeitungen hergestellt, wobei die Oberfläche im nächsten Schritt annähernd spiegelglatt geschliffen wird. In einem anschließenden Schritt wird dann diese glatte Oberfläche zur Bildung von makroskopischen Unebenheiten 17 oberflächenbearbeitet, d.h. mit einer lackähnlichen Oberflächenstruktur versehen, beipielsweise durch Ätzen, Funkenerodieren, Prägen oder Strahlen (Kugelstrahlen, Sandstrahlen). Die Oberfläche erhält eine orangenhautartige Struktur, die leicht uneben oder hügelig erscheint. Die Oberflächenrauhigkeit muß durch diesen Verfahrensschritt jedoch nicht zwingend verschlechtert werden.

Anschließend wird der Trägerkörper im Bereich der Folienkontaktfläche mit einer thermischen Isolationsschicht 24 versehen. Die thermische Isolationsschicht 24 erstreckt sich über die gesamte Oberseite und die gesamte Folienkontaktfläche des Trägerkörpers. Die Isolationsschicht 24 wird durch anodische Oxidation erzeugt und ist z.B. eine Eloxalschicht. Bei diesem galvanotechnischen Verfahren wird die Folienkontaktfläche, die ja ursprünglich aus Aluminium war, durch die anodische Oxidation in eine Oxidschicht umgewandelt. Die so erzeugte harte Oberfläche ist fest mit dem Trägerkörper verbunden, da sie zu etwa 1/3 aus dem Metall herauswächst und zu 2/3 in das Metall, also das Aluminium hinein. Die Dicke der Isolationsschicht beträgt zwischen 6 und 50 µm, und die Wärmeleitfähigkeit der Isolationsschicht 24 entspricht max. 50 %, gemäß der bevorzugten Ausführungsform max. 5 %, der des Trägerkörpers, also des Aluminiums oder der verwendeten Aluminiumlegierung.

Alternativ kann die Isolationsschicht 24 auch durch eine plasmachemische Beschichtung erzeugt werden. Solche Beschichtungen werden z.B. in Salzlösungen als Elektrolyte erzeugt. Über eine Stromquelle wird das zu beschichtende Werkzeug, das als Anode wirkt, über Plasmaentladung im Elektrolyten mit der Isolationsschicht 24 versehen. Das Aluminium oder die Aluminiumlegierung wird partiell in kurzer Zeit auf der Oberfläche geschmolzen, und zwar aufgrund des erzeugten Sauerstoffplasmas. Es entsteht ein Oxidkeramik-Metallverbund, also eine Oxidkeramikschicht auf dem Trägerkörper.

Die lackähnliche Struktur zeichnet sich auch nach der Erzeugung der Isolationsschicht 24 außen ab. Zum Tiefziehen hat der Trägerkörper 10 mehrere Ansaugkanäle 28, 30. Die Folien-Tiefzieh- oder Folien-Schäumform ist darüber hinaus auch beheizt. Alternativ kann die lackähnliche Struktur auch nach dem Beschichten in die Tiefzieh- oder Schäumform eingebracht werden, wobei die Beschichtung ausreichend dick sein muß.

Die Herstellung des Karosserieanbauteils wird im folgenden erläutert. Zuerst wird die Folie 12 im Bereich ihres äußeren Umfangsrandes 36 durch einen Spannrahmen 38, 40 gehalten, in das Tiefziehwerkzeug gelegt und durch ein eingefahrenes Heizelement erwärmt. Anschließend wird die beheizte Tiefziehform 10 nach oben gefahren, um die Folie 12 plastisch umzuformen und tiefzuziehen. Während des Tiefziehvorgangs wird an die Ansaugkanäle 28, 30 ein Vakuum angelegt, so daß keine Luft zwischen der Folie 12 und der Tiefziehform 10 in den Bereichen der Ecken der dargestellten Einbuchtungen verbleibt und die Folie 12 in die entsprechenden Ecken gesaugt wird.

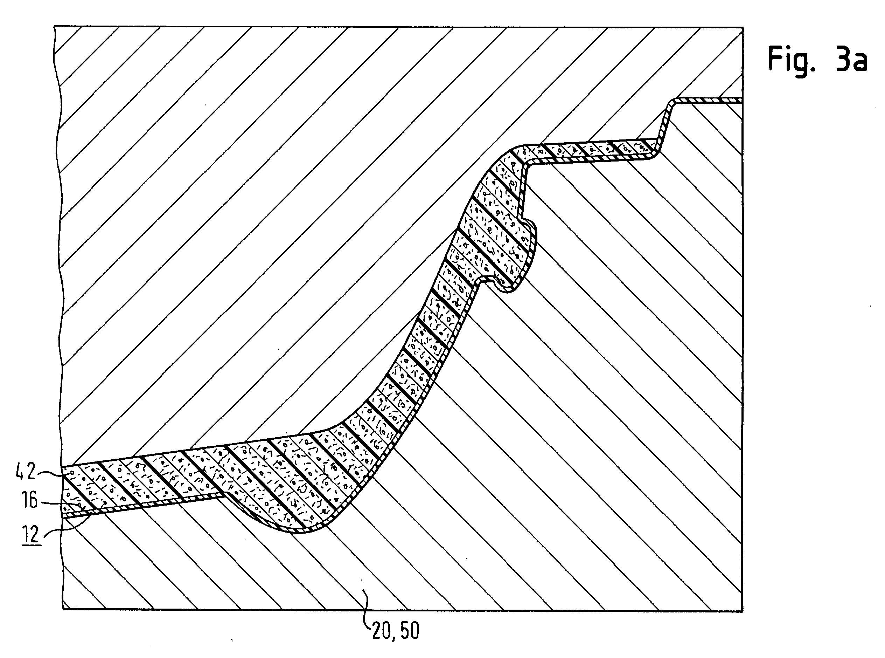

Die Folie 12 hat nach dem Tiefziehen eine lackähnliche Oberflächenstruktur, die sie auch nach dem darauffolgenden Hinterschäumen oder Hinterspritzen beibehält. Nachdem die Folie 12 dem Tiefziehwerkzeug entnommen wurde, wird sie in ein Schäum- oder Spritzwerkzeug gelegt (Fig. 3a). Die Rückseite der Folie 12, also diejenige Seite, die an der Folienkontaktfläche anlag, liegt dabei nach oben. Rückseitig wird das flüssige PU-Material 42 mit darin verteilten Glasfasern (LFI-Verfahren) aufgetragen. Anschließend wird die Schäumform geschlossen, und der Kunststoff schäumt aus. Alternativ kann jedoch auch ein Hinterspritzen erfolgen.

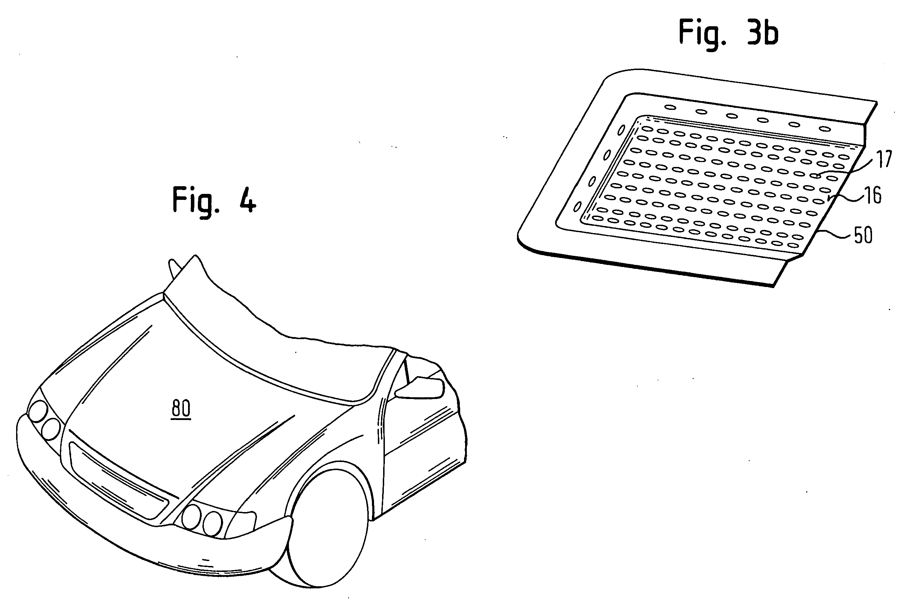

Es ist möglich, der Oberfläche des Verbundbauteils auch erst nach dem Tiefziehen, beim Hinterschäumen, die lackähnliche Struktur zu geben. Hierzu wird die in Fig. 3 gezeigte untere Schaumformhälfte 50 an der Folienkontaktfläche 16 nach der Spanenden Bearbeitung und dem anschließenden Schleifvorgang oberflächenbearbeitet, wie zuvor schon anhand der Folien-Tiefzieh- oder Folien-Schäumform erläutert. Die Oberfläche erhält makroskopische Unebenheiten (siehe Fig. 3b), die eine lackähnliche Struktur nachahmt. Die Folienverformung erfolgt durch den Schäumdruck. Bei dieser Variante bildet die Schaumformhälfte 50 auch den Trägerkörper 20.

In Figur 4 ist eine zweite Ausführungsform eines erfindungsgemäß hergestellten Verbundbauteils dargestellt, nämlich in Form einer Motorhaube 80. Dadurch, daß die sichtbare Oberfläche des Verbundbauteils der angrenzenden Lackstruktur im Kotflügelbereich angepaßt ist, erkennt man von außen nicht, daß das unlackierte Kunststoff-Verbundbauteil im Gegensatz zum lackierten Blech nicht aus Metall und unlackiert ist.

Zu betonen ist, daß die lackähnliche Oberfläche und/oder thermische Isolationsschicht nicht zwingend auf der gesamten Oberseite vorgesehen sein muß. Wenn ohnehin nach dem Tiefziehen ein Randbeschnitt der Folie 12 erfolgt, muß dieser Randbereich nicht mit der lackähnlichen Oberfläche und/oder der Isolationsschicht versehen sein.

Betrachtet man die Herstellung der Fahrzeugaußenhaut insgesamt, so ergibt sich folgendes erfindungsgemäßes Verfahren: die mittlere Tiefe der Lackstruktur der an das Verbundbauteil angrenzenden lackierten Außenhaut wird ermittelt oder ist vorgegeben (mittlere Tiefe der angerundeten Täler zu den abgerundeten "Hügeln"). Eine Folientiefzieh- oder Schäumform wird entsprechend der Erfindung hergestellt, bei der die mittlere Bearbeitungstiefe zwischen dem 1,5 und dem 3-fachen der mittleren Tiefe der Lackstruktur liegt, vorzugsweise dem etwa 2-fachen der mittleren Tiefe der Lackstruktur entspricht.

## Patentansprüche

1. Folien-Tiefzieh- oder Folien-Schäumform, **gekennzeichnet durch** einen Trägerkörper (20) mit einer thermischen Isolationsschicht (24) an einer Folienkontaktfläche (16) der Tiefzieh- oder Schäumform.

2. Folien-Tiefzieh- oder Folien-Schäumform nach Anspruch 1, **dadurch gekennzeichnet, daß** der Trägerkörper (20) aus Metall, insbesondere Aluminium oder einer Aluminiumlegierung besteht.

3. Folien-Tiefzieh- oder Folien-Schäumform nach Anspruch 1 oder 2, **dadurch gekennzeichnet, daß** die Isolationsschicht (24) eine Wärmeleitfähigkeit hat, die max. 50 % der Wärmeleitfähigkeit des Trägerkörpers (20) entspricht.

4. Folien-Tiefzieh- oder Folien-Schäumform nach einem der vorhergehenden Anspruche, **dadurch gekennzeichnet, daß** die Isolationsschicht (24) eine Beschichtung ist.

5. Folien-Tiefzieh- oder Folien-Schäumform nach Anspruch 4, **dadurch gekennzeichnet, daß** die Beschichtung durch anodische Oxidation erzeugt ist.

6. Folien-Tiefzieh- oder Folien-Schäumform nach Anspruch 5, **dadurch gekennzeichnet, daß** die Isolationsschicht eine Eloxalschicht ist.

7. Folien-Tiefzieh- oder Folien-Schäumform nach Anspruch 4, **dadurch gekennzeichnet, daß** die Beschichtung eine plasmachemische Beschichtung ist.

8. Folien-Tiefzieh- oder Folien-Schäumform nach Anspruch 7, **dadurch gekennzeichnet, daß** die Beschichtung eine Oxidkeramikschicht ist.

9. Folien-Tiefzieh- oder Folien-Schäumform nach einem der vorhergehenden Ansprüche, **dadurch gekennzeichnet, daß** die Isolationsschicht (24) eine Dicke zwischen 6 und 50 µm hat.

10. Folien-Tiefzieh- oder Folien-Schäumform nach einem der vorhergehenden Ansprüche, **dadurch gekennzeichnet, daß** die Folienkontaktfläche (16) eine lackähnliche Oberflächenstruktur hat.

11. Folien-Tiefzieh- oder Folien-Schäumform nach Anspruch 10, **dadurch gekennzeichnet, daß** der Trägerkörper (20) unter der Isolationsschicht (24) ebenfalls die lackähnliche Oberflächenstruktur hat.

12. Folien-Tiefzieh- oder Folien-Schäumform nach Anspruch 11, **dadurch gekennzeichnet, daß** der Trägerkörper (20) durch Ätzen, Funkenerodieren, Prägen oder Strahlen die lackähnliche Oberflächenstruktur erhält.

13. Verfahren zum Herstellen eines Verbundbauteils, mit einer die Außenhaut des fertigen Verbundbauteils definierenden Folie (12), **gekennzeichnet durch** folgende Schritte:
a) eine Folie (12) wird in ein mit der Folien-Tiefzieh- oder Folien-Schäumform nach einem der Ansprüche 1 bis 12 versehenes Tiefziehwerkzeug gelegt und
b) die Folie (12) wird tiefgezogen.

14. Verfahren nach Anspruch 13, **dadurch gekennzeichnet, daß** die Folie (12) vor dem Tiefziehen erwärmt wird.

15. Verfahren nach Anspruch 13 oder 14, **dadurch gekennzeichnet, daß** die Folien-Tiefziehform während des Tiefziehens beheizt wird.

16. Verfahren nach einem der Ansprüche 13 bis 15, **dadurch gekennzeichnet, daß** das Verbundbauteil ein großflächiges Karosserieanbauteil ist.

17. Verfahren nach einem der Ansprüche 13 bis 16, **dadurch gekennzeichnet, daß** die Folie (12) hinterschäumt oder hinterspritzt wird.

18. Verfahren nach einem der Ansprüche 13 bis 17, **dadurch gekennzeichnet, daß** als Folie (12) eine mehrschichtige, insbesondere durchgefärbte Koextrusionsfolie verwendet wird.
